# EUROPÄISCHE PATENTANMELDUNG

(11) **EP 1 718 058 A1**
(43) Veröffentlichungstag der Anmeldung: **02.11.2006**
(21) Anmeldenummer: 06008133.8
(22) Anmeldetag: 19.04.2006
(51) Int. Cl.: H04N 1/107

(54) **Verfahren zum Scannen von Dokumenten**

(30) Priorität: 19.04.2005 DE 102005018106
(71) Anmelder: BenQ Corporation, Gueishan Taoyuan 333 (TW); BenQ Mobile GmbH & Co. OHG, 81667 München (DE)
(72) Erfinder: St John, Ben, 81735 München (DE); Jamwal, Ankit, 81373 München (DE)
(74) Vertreter: Epping - Hermann - Fischer

(57) **Zusammenfassung**

Die Erfindung betrifft ein Verfahren zur Gewinnung eines Ergebnisbildes unter Verwendung einer Mehrzahl von Einzelbildern, die nacheinander bei einer zweidimensionalen Scanbewegung erzeugt werden. Erfindungsgemäß erfolgen mindestens ein Orientierungs-Scan in einer ersten Richtung und streifenweise Abtast-Scans in einer zweiten Richtung, wobei die beiden Richtungen in etwa senkrecht zueinander sind.

## Beschreibung

Die Erfindung betrifft ein Verfahren gemäß dem Oberbegriff des Patentanspruchs.

Ein solches Verfahren dient insbesondere zum Einlesen beziehungsweise Scannen von Dokumenten. Unter Dokumenten sind allgemein Vorlagen mit Text- und Bildinhalten zu verstehen. Zur Durchführung des Verfahrens sind als mobile Endgeräte vorzugsweise Digitalkameras und Video-Handys geeignet.

Die Auflösung handelsüblicher Digitalkameras reicht noch nicht aus, um eine ausreichende Auflösung des Dokuments mit einer Einzelaufnahme zu erzeugen.

Das Scannen von Dokumenten durch eine Vielzahl von Einzelbildern bei geringem Abstand zum Dokument zur Steigerung der Auflösung ist ein bekannter Ansatz. Es gibt bisher nur wenige und zum Teil sehr instabile Verfahren, die dazu verwendet werden können, um aus den aufgezeichneten Einzelbildern wieder ein zweidimensionales Gesamtbild zusammenzusetzen.

Die meisten Verfahren basieren darauf, dass die Bildinformation in einem ersten Verarbeitungsschritt durch sehr komplexe Rechenoperationen zunächst entzerrt werden. In einem darauf folgenden Verarbeitungsschritt wird dann die angrenzende Bildinformation zu benachbarten Bildern in alle vier Bildkantenrichtungen harmonisiert. Die Bilder benötigen hierzu nur einen geringen Überlapp. Jedes Bild wird sowohl horizontal als auch vertikal zu benachbarten Bildern korrigiert. Neben der kaum zu tolerierenden hohen Rechenzeit führen diese Verfahren häufig zu rautenförmigen Verzerrung der Bildinformation, die für den Betrachter sehr störend sind. Die Verfahren sind aufgrund ihrer Komplexität häufig nur interaktiv und offline durchzuführen.

Aus der WO 03/091948 ist ein Verfahren zur Erweiterung des Kameragesichtsfeldes durch Scannen bekannt. Hierbei wird ein Ergebnisbildes unter Verwendung einer Mehrzahl von Einzelbildern generiert, die nacheinander bei einer Scanbewegung erzeugt werden. Die aufeinander folgenden Einzelbilder weisen gegeneinander jeweils einen geringen Versatz auf, wobei in Abhängigkeit vom Versatz eine Bildinformation aus den Einzelbildern gewonnen und in das Ergebnisbild kopiert wird.

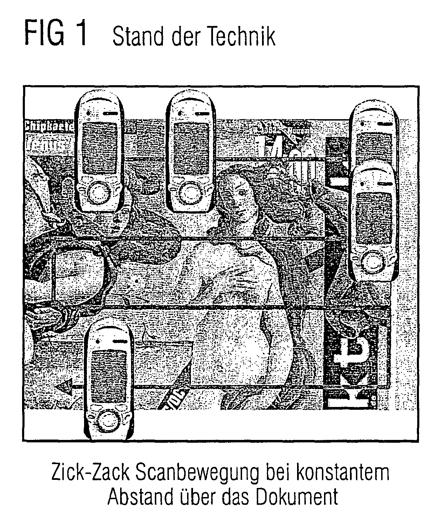

Bei dem hier beschriebenen zweidimensionalen Abtast-Scan von einem Dokument beziehungsweise einer Bildvorlage erfolgt die Abtastbewegung zick-zack-förmig (siehe Figur 1). Beim Wechsel der Abtastrichtung, beispielsweise von einer horizontalen in eine vertikale Richtung, entstehen bei der Generierung des Ergebnisbildes größere Fehler. Ebenso ist die Zusammensetzung der einzelnen Bildstreifen problematisch.

Der Erfindung liegt die Aufgabe zugrunde ein Verfahren der eingangs genannten Art anzugeben, das auch bei einem zweidimensionalen Scan ohne hohe Rechenleistung eine gute Qualität des Ergebnisbildes liefert.

Diese Aufgabe wird erfindungsgemäß durch die in Patentanspruch 1 angegebenen Merkmale gelöst.

Im folgenden wird die Erfindung anhand eines in der Zeichnung dargestellten Ausführungsbeispieles näher beschrieben. Dabei zeigen:
Figur 1 eine Scanbewegung zur Abtastung eines Dokumentes gemäß dem Stand der Technik, und
Figur 2 die erfindungsgemäße Scanbewegung zur Abtastung eines Dokumentes.

Das erfindungsgemäß Verfahren geht von der Erzeugung von Einzelbildern aus, die bei einer zweidimensionalen Scan- oder Abtastbewegung generiert werden. Zur Generierung wird beispielsweise ein mobiles Endgerät, wie Kamera oder Video-Handy, verwendet.

Dabei werden beispielsweise Einzelbilder generiert, die zueinander einen hohen Überlappungsgrad aufweisen. Hierdurch wird ein Gesamtbild erzeugt, das nahezu keine Verzerrungen aufweist und einen sehr großen Raumwinkel abdeckt. Das Verfahren ermöglicht es beispielsweise Dokumente mit einer hohen Auflösung einzuscannen.

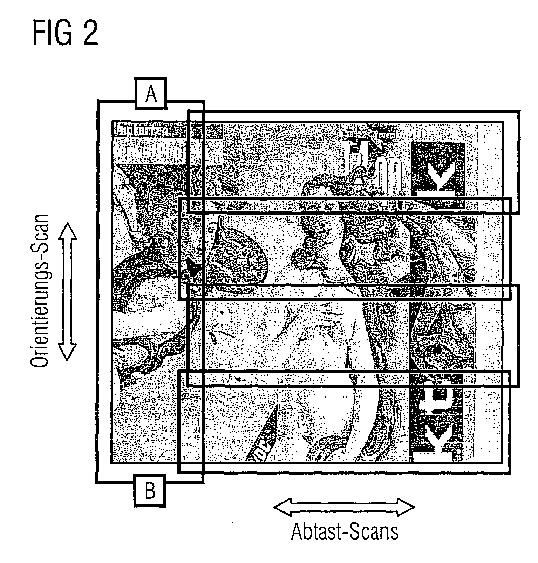

In der Figur 2 ist die erfindungsgemäße Abtastbewegung dargestellt. Dabei wird grundsätzlich das Dokument in zwei zueinander senkrechten, oder beinahe senkrechten Richtungen abgetastet.

So wird beispielsweise ein Orientierungs-Scan in, bezogen auf das dargestellte Dokument, einer vertikalen Richtung durchgeführt. Dieser Orientierungs-Scan tastet das Dokument zwischen den beiden dargestellten Punkten A und B ab. Die Bewegungsrichtung von Punkt A nach Punkt B oder umgekehrt ist von untergeordneter Bedeutung.

Anschließend wird das restliche Dokument mit streifenweisen Abtast-Scans in horizontaler Richtung abgetastet. Die Richtung von Abtast-Scan und Orientierungs-Scan sind vorzugsweise senkrecht zueinander. Der Startpunkt für die Abtast-Scans ist beispielsweise der Punkt A oder der Punkt B.

Der Orientierungs-Scan kann auch in horizontaler Richtung, mit entsprechenden Abtast-Scans in vertikaler Richtung, ausgeführt werden (in der Zeichnung nicht explizit dargestellt).

Bei einer Ausgestaltung der Erfindung erhält der Benutzer nach Durchführung des Orientierungs-Scans vom verwendeten Gerät eine visuelle und / oder akustische Information zur Ansteuerung des Startpunktes A oder B für die Abtast-Scans.

Zur Durchführung des erfindungsgemäßen Verfahrens können auch mehrere Orientierungs-Scan hilfreich sein. Die ist insbesondere bei vergleichsweise inhomogenen Vorlagen mit Bild- und Textinhalten der Fall.

Der Bildverarbeitungs-Algorithmus erhält durch die zueinander rechtwinklig durchgeführten Scans Informationen über die x-und die y-Achse. Weiter sind die Abtast-Scans kürzer, was sich durch einen reduzierten akkumulierten Fehler bemerkbar macht.

## Patentansprüche

1. Verfahren zur Gewinnung eines Ergebnisbildes unter Verwendung einer Mehrzahl von Einzelbildern, die nacheinander bei einer zweidimensionalen Scanbewegung erzeugt werden,
**dadurch gekennzeichnet, dass**
mindestens ein Orientierungs-Scan in einer ersten Richtung und streifenweise Abtast-Scans in einer zweiten Richtung erfolgen, wobei die beiden Richtungen in etwa senkrecht zueinander sind.

2. Verfahren nach Anspruch 1, bei dem die Mehrzahl von Einzelbildern einen hohen Überlappungsgrad aufweisen.

3. Verfahren nach Anspruch 1 oder 2, bei dem der Orientierungs-Scan in der ersten Richtung von einem ersten Punkt bis zu einem zweiten Punkt erfolgt, und bei dem der erste Punkt oder der zweite Punkt ein Startpunkt für die Abtast-Scans ist.

4. Verfahren nach einem der Ansprüche 1 bis 3, bei dem zur Generierung des Ergebnisbildes ein mobiles Endgerät verwendet wird.

5. Verfahren nach Anspruch 4, bei dem das mobile Endgerät eine Kamera oder ein Video-Handy umfasst.

6. Verfahren nach Anspruch 4 oder 5, bei dem das mobile Endgerät nach Durchführung des Orientierungs-Scans eine visuelle und / oder akkustische Information zur Ansteuerung des ersten oder des zweiten Startpunkts für die Abtast-Scans bereitstellt.

7. Verfahren nach einem der Ansprüche 1 bis 6, bei dem mehrere der Orientierungs-Scans durchgeführt werden.
